# EUROPEAN PATENT APPLICATION

(11) **EP 4 220 901 A1**
(43) Date of publication of application: **02.08.2023**
(21) Application number: 22154501.5
(22) Date of filing: 01.02.2022
(51) Int. Cl.: H02K 1/278, H02K 1/2786, H02K 7/18

(54) **PERMANENT MAGNET MACHINE**

(71) Applicant: Siemens Gamesa Renewable Energy A/S, 7330 Brande (DK)
(72) Inventor: Becs, Balazs Janos, 24943 Flensburg (DE); Bhide, Ravindra, Cambridge, CB5 8BG (GB); Demissie, Edom, Sheffield, S3 7XB (GB); Jacobsen, Bo Nedergaard, 8300 Odder (DK)
(74) Representative: SGRE-Association

(57) **Abstract**

A permanent magnet electrical machine (10) including a rotor body (130) and a plurality of permanent magnet modules (101) arranged around a rotational axis (Y) of the permanent magnet electrical machine (10), each permanent magnet module (101) comprising at least a permanent magnet (200) and a baseplate (301), the baseplate (301) including a base side (311) for attaching the permanent magnet module (101) to the rotor body (130) of the permanent magnet machine (10) and an opposite top side (312) for attaching the permanent magnet (200) to the baseplate (301). The rotor body (130) includes at least a recess (210, 310) facing the baseplate (301) or at least partially housing the baseplate (301). The at least one elastomeric insert (350) is provided inside the recess (210, 310) between the baseplate (301) and the rotor body (130).

## Description

### Field of invention

The present invention relates to the field of permanent magnet machines including permanent magnet modules.

### Art Background

A permanent-magnet electric machine, such as an electric generator installed in a wind turbine, typically comprises a rotor which rotates relative to a stator around a rotational axis. Stator and rotor are separated from each other by an airgap, circumferentially extended around the rotational axis.

In a permanent-magnet electric machine the rotor comprises a plurality of permanent magnets modules, each module including a baseplate and one or more permanent magnets attached to the baseplate. The baseplate is attached to the rotor body, so that, the baseplate is interposed between the respective magnet and the rotor body.

When mounting permanent magnet modules on the rotor, tolerances are needed to allow the module installation, leaving room for movement during operation. A certain degree of freedom is therefore present, which allows for the movement of each permanent magnet module along the tangential direction, i.e. along the direction of rotation of the rotor, and/or along the radial direction, i.e. along the direction perpendicular to the axis of rotation of the rotor. The tangential oscillations and consequent rattling of the permanent magnet modules in the tangential and/or the radial directions may be avoided by fixing them, for example by means of gluing or bolting to the rotor body. This would however add costs and complexity to the electric machine.

It is therefore desirable to provide efficient and cost-effective constructional features of a permanent magnet machine for effectively fixing the permanent magnet modules to the rotor body and avoiding the oscillations and rattling of the permanent magnet modules with respect to the rotor body.

### Summary of the Invention

This objective may be solved by the permanent magnet electrical machine according to the independent claims. Advantageous embodiments of the present invention are described by the dependent claims.

According to the present invention a permanent magnet electrical machine includes a rotor body and a plurality of permanent magnet modules arranged around a rotational axis of the permanent magnet electrical machine, each permanent magnet module comprising at least a permanent magnet and a baseplate, the baseplate including a base side for attaching the permanent magnet module to the rotor body of the permanent magnet machine and an opposite top side for attaching the permanent magnet to the baseplate. The rotor body includes at least a recess facing the baseplate or at least partially housing the baseplate. At least one elastomeric insert is provided inside the recess between the baseplate and the rotor body.

The present invention may be applied to the electrical generator of a wind turbine.

Advantageously, the elastomeric insert and the recess cooperate in keeping the permanent magnet module in place, preventing the rattling of the permanent magnet modules. The elastomeric insert is getting compressed during insertion creating a force acting on the magnet module which prevents/reduces a relative motion between the magnet module and the rotor body.

The recess may face the base side of the baseplate and house a non-magnetic and/or non-conductive medium for creating a magnetic flux barrier between the rotor body and the permanent magnet module. According to possible embodiments of the invention, the non-magnetic and/or non-conductive medium may be air. According to other possible embodiments of the invention, the non-magnetic and/or non-conductive medium is the elastomeric insert.

According to possible embodiments of the invention, the recess houses the elastomeric insert and a tip protruding from the base side of the baseplate. The tip provides an improved contact between the elastomeric insert, the baseplate and the rotor body. The tip may protrude according to the radial direction or the tangential direction or to a direction inclined with respect to the radial and the tangential directions.

According to possible embodiments of the invention, the rotor body includes a plurality of circumferential recess each circumferential recess housing a respective circumferential edge of the baseplate, at least one elastomeric insert being provided at one circumferential edge or at the base side of the baseplate between the baseplate and the rotor body. The elastomeric insert may extend itself in the circumferential and/or in radial the direction.

The elastomeric insert may be fixed to the baseplate. To fix the elastomeric insert to the baseplate at least one circumferentially or radially protruding tip may be provided at one circumferential edge or at the base side of the baseplate for fixing the elastomeric insert to the baseplate. Alternatively, at least one groove may be provided at one circumferential and/or radial edge and/or at the base of the baseplate for fixing the elastomeric insert to the baseplate.

According to other possible embodiments of the invention, the elastomeric insert may be fixed to the rotor body.

According to yet other possible embodiments of the invention, the elastomeric insert may be provided as a detachable element between the rotor body and the permanent magnet module.

According to embodiments of the present invention, the elastomeric insert may be provided at a non-torque side of the baseplate or at a torque side of the baseplate or on both the torque and the non-torque sides. With "torque side" it is meant a side of the baseplate in the direction of rotation of the rotor body. With "non-torque side" it is meant a side of the baseplate against the direction of rotation of the rotor body.

### Brief Description of the Drawings

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including embodiments of the present invention.
Fig. 2 shows a cross-sectional view of a permanent magnet machine including a rotor according to the present invention.
Fig. 3 shows a more detailed view of the rotor of the permanent magnet machine of Fig. 2, illustrating a first plurality of embodiment of the present invention.
Fig. 4 shows a magnified view of the detail IV of Fig. 3 showing a first embodiment of the present invention.
Fig. 5 shows a magnified view of the detail IV of Fig. 3 showing a second embodiment of the present invention.
Fig. 6 shows a magnified view of the detail IV of Fig. 3 showing a third embodiment of the present invention.
Fig. 7 shows a magnified view of the detail IV of Fig. 3 showing a fourth embodiment of the present invention.
Fig. 8 shows a magnified view of the detail IV of Fig. 3 showing a fifth embodiment of the present invention.
Fig. 9 shows a magnified view of the detail IV of Fig. 3 showing a sixth embodiment of the present invention.
Fig. 10 shows a top view of a magnet module for a permanent magnet machine according to the present invention.
Fig. 11 shows a more detailed view of the rotor of the permanent magnet machine of Fig. 2, illustrating a seventh embodiment of the present invention.
Fig. 12 shows a more detailed view of the rotor of the permanent magnet machine of fig. 2, illustrating an eighth embodiment of the present invention.
Fig. 13 shows a more detailed view of the rotor of the permanent magnet machine of fig. 2, illustrating a nineth embodiment of the present invention.
Fig. 14 shows a more detailed view of the rotor of the permanent magnet machine of fig. 2, illustrating a tenth embodiment of the present invention.
Fig. 15 shows a more detailed view of the rotor of the permanent magnet machine of fig. 2, illustrating a eleventh embodiment of the present invention.

### Detailed Description

The illustrations in the drawings are schematically. It is noted that in different figures, similar or identical elements are provided with the same reference signs.

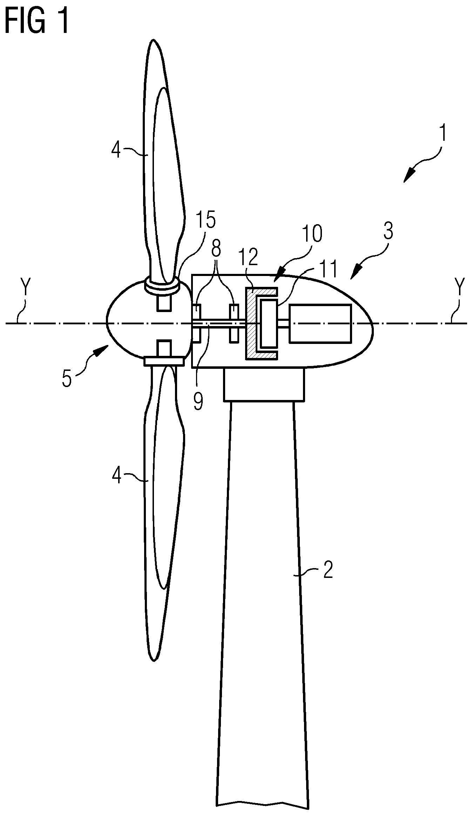

**Figure 1** shows a partial cross-sectional view of a wind turbine 1 including a permanent magnet machine 10, i.e. an electrical generator, which includes a permanent magnet module according to the invention. The wind turbine 1 further comprises at least a wind rotor 5 having a hub and at least one blade 4 (in the embodiment of Figure 1, the wind rotor comprises three blades 4, of which only two blades 4 are visible). The wind rotor 5 is rotatable around a longitudinal rotational axis Y. The permanent magnet machine 10 includes a stator 11 and a rotor 12. The rotor 12 is connected to the wind rotor 5 to be rotatable with respect to the stator 11 about the longitudinal axis Y. The terms axial, radial and circumferential in the following are to be intended with reference to the longitudinal axis Y of rotation of the permanent magnet machine 10. In the embodiment of Figure 1, the rotor 12 is radially external with respect the stator 11 and rotatable about the longitudinal axis Y. A circumferential air gap is provided between the stator 11 and the rotor 12. According to other possible embodiments of the present invention (not represented in the attached figures), the rotor 12 is radially internal with respect the stator 11 and rotatable about the longitudinal axis Y. According to other possible embodiments of the present invention (not represented in the attached figures), the present invention may be applied to any type of permanent magnet electric machines, e.g. radial, axial, etc. A plurality of permanent magnets modules (not visible in Figure 1) is attached to the rotor 12 by means of respective baseplates, as detailed in the following. According to other possible embodiments of the present invention (not represented in the attached figures), a plurality of permanent magnets modules may be attached to the stator of a permanent magnet machine.

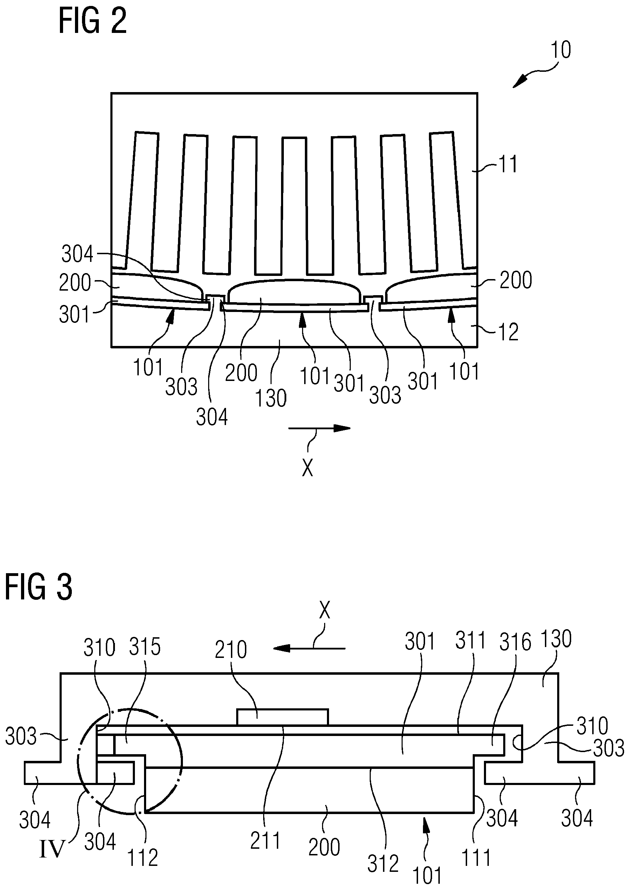

**Figure 2** shows a partial cross-sectional view of the permanent magnet machine 10 including a plurality of permanent magnet modules 101 attached to the rotor 12. The permanent magnet modules 101 are attached to an inner side of the rotor 12 which faces the stator 11. Each permanent magnet module 101 comprises a permanent magnet 200 and a baseplate 301. According to other embodiment of the present invention (not shown), each permanent magnet module 101 may comprise more than one permanent magnet 200 and more than one baseplate 301. Each baseplate may be permanently attached or removably attachable to the rotor body 130. Each of the permanent magnets 200 is attached to a rotor body 130 of the rotor 12 by means of the respective base plate 301. The permanent magnet modules 101 are distributed about the longitudinal axis Y in such a way that a plurality of tangential gaps is provided between the permanent magnet modules 101. Each tangential gap is tangentially provided between two tangentially adjacent permanent magnet modules 101. At each tangential gap a radial protrusion 303 is provided, which radially protrudes from an inner surface of the rotor body 130 towards the longitudinal axis Y. The radial protrusion 303 is T-shaped and comprises at its radial end two opposite circumferential fins 304. The T-shaped protrusion 303 forms a tangential recess for housing a respective tangential end of a respective baseplate 301, as better detailed below with reference to Fig 3. Each fin 304 radially holds a respective baseplate 301 at a respective tangential end 315, 316 for radially keeping in place a respective permanent magnet module 101. Each permanent magnet module 101 may be further radially maintained in contact with the rotor body 130 by means of the radial magnetic force establishing between the respective permanent magnet 200 and the rotor body 130. The T-shaped protrusion 303 may have a flat or cylindrical surface.

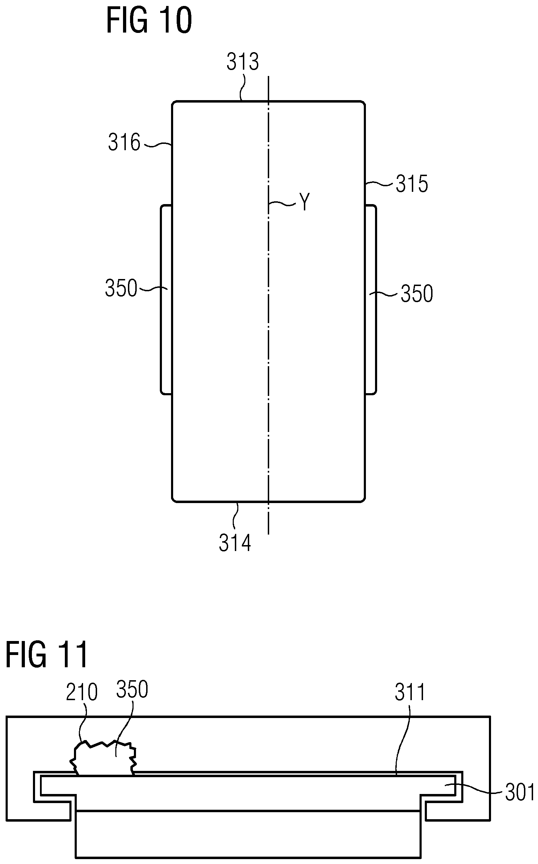

**Figure 3** shows a partial cross-sectional view of the rotor 12 of figure 2, where the coupling between the rotor body 130 and a permanent magnet module 101 is shown. The baseplate 301 includes a base side 311 for attaching the permanent magnet module 101 to the rotor body 130 and a top side 312, radially opposite to the base side 311 for attaching the permanent magnet 200 to the baseplate 301, for example by gluing or other fixing means. The tangential direction X, i.e. the direction of rotation of the rotor 12 (towards left in the drawing of figure 3) defines a torque side 111 and a tangentially opposed non-torque side 112. With respect to direction of the tangential direction X, the torque side 111 is positioned opposite to the direction of rotation of the rotor body 130 (right side in the drawing of figure 3) and the non-torque side 112 is in the direction of rotation of the rotor body (left side in the drawing of figure 3). In the tangential direction the base side 311 is larger than the top side 312, a step being provided therebetween at each of the torque side 111 and the non-torque side 112 to respectively form the two tangential ends 315, 316 of the baseplate 301, where the circumferential fins 304 are active for radially holding the permanent magnet module 101 in place. The circumferential fins 304 prevent separation of the baseplate 301 from the rotor body 130. The rotor body 130 includes a further radial recess 210 interposed between the baseplate 301 and the rotational axis Y. In the view of figure 3, the radial recess 210 has a rectangular shape and is provided between the torque side 111 and the non-torque side 112 at the same distance from the torque side 111 and from the non-torque side 112. According to other embodiments of the present invention, the radial recess 210 may have any other shape and be closer to the torque side 111 or to the non-torque side 112. According to other embodiments of the present invention, a plurality of radial recesses 210 may be provided between the torque side 111 and the non-torque side 112. The radial recess 210 has a radial recess opening 211 towards the baseplate 301. The radial recess 210 houses a non-magnetic and/or non-conductive medium for creating a magnetic flux barrier between the rotor body 130 and the permanent magnet module 101. The radial recess 210 may house air. The radial recess 210 may alternatively house an elastomeric insert 350, as better detailed in the following wit reference to figures 11 to 15. The radial recess 210 constitutes a barrier for the magnetic flux path, which is consequently deviated towards the portions of the base side 311 not facing the radial recess 210. The attraction between the baseplate 301 and the rotor body 130 is increased, thus providing stability to the coupling between and reduce tangential and/or radial oscillations and rattling of the baseplate 301 with respect to the rotor body 130. Tangential and/or radial oscillations and rattling of the baseplate 301 with respect to the rotor body 13 may be further reduced by providing at least one elastomeric insert inside the tangential recess 310 between one or both the tangential ends 315, 316 of the baseplate 301 and the rotor body 130, as better detailed below with reference to Figs. 11 to 15. According to the different embodiment of the present invention, the elastomeric insert 350 may be fixed to a respective tangential end 315, 316 or to a respective tangential recess 310 and/or in the recess 210. According to the different embodiment of the present invention, the elastomeric insert 350 may be provided as a separate detachable element between the rotor body 130 and the baseplate 301.

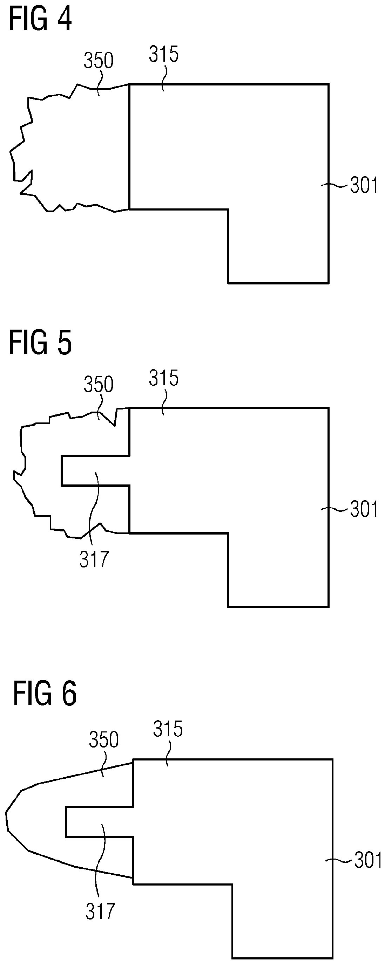

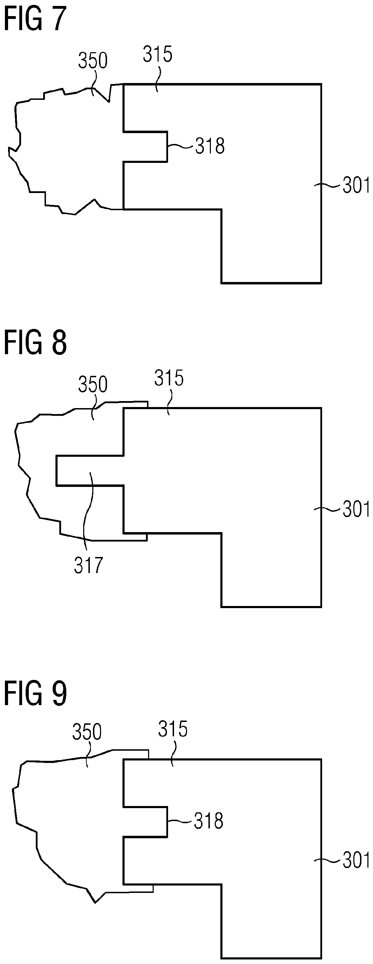

**Figures 4** to **9** show respective embodiments of figure 3, where the elastomeric insert 350 is fixed to the tangential end 315 at the non-torque side 112 of the baseplate 301. Alternatively, the elastomeric insert 350 may be fixed to the other tangential end 316 at the torque side 111 of the baseplate 301 or to both the tangential ends 315, 316. In the first embodiment (figure 4), the elastomeric insert 350 is tangentially protruding from the tangential end 315. In the second embodiment (figure 5), the elastomeric insert 350 is tangentially protruding from the tangential end 315 and is further fixed to a circumferentially protruding tip 317 provided at the tangential end 315. The circumferentially protruding tip 317 may be provided at any radial position along the circumferential edge of the tangential end 315, for example at an intermediate radial position, as shown in figure 5. According to other embodiments of the present invention (not shown) a plurality of protruding tips 317 may be provided. The elastomeric insert 350 may have any shape. According to the third embodiment of figure 6, the elastomeric insert 350 has a pointed shape along the tangential direction. In the fourth embodiment (figure 7), the elastomeric insert 350 is tangentially protruding from the tangential end 315 and is further fixed to a groove 318 provided at the tangential end 315. The groove 318 may be provided at any radial position along the circumferential edge of the tangential end 315, for example at an intermediate radial position, as shown in figure 7. According to other embodiments of the present invention (not shown) a plurality of grooves 318 may be provided. The fifth embodiment of fig. 8 differentiates itself from the embodiments of the figures 5 and 6 for showing an elastomeric insert 350 which is tangentially and radially protruding from the tangential end 315, in order to be interposed between the baseplate 301 and the rotor body 130 along two or three sides of the tangential end 315. Analogously, the sixth embodiment of fig. 9 differentiates itself from the fourth embodiment of figure 7 for showing an elastomeric insert 350 which is tangentially and radially protruding from the tangential end 315, in order to be interposed between the baseplate 301 and the rotor body 130 along two or three sides of the tangential end 315.

**Figure 10** shows a top view of the baseplate 301 of figure 3. The view of figure 5 is radially oriented towards the longitudinal axis Y. The baseplate 301 axially extends along the longitudinal axis Y between two axial ends 313, 314. The baseplate 301 extends along the circumferential direction between two circumferential ends 315, 316, respectively provided at the torque side 111 and at the non-torque side 112. At both the circumferential ends 315, 316 a respective elastomeric insert 350 is provided. Each elastomeric insert 350 has an elongated shape parallel to the longitudinal axis Y. According to other embodiments of the present invention (not shown), may have other shapes. Each elastomeric insert 350 may insert for the entire axial extension of the two circumferential ends 315, 316 or only for a portion thereof. A plurality of elastomeric inserts 350 may be provided along one or both circumferential ends 315, 316.

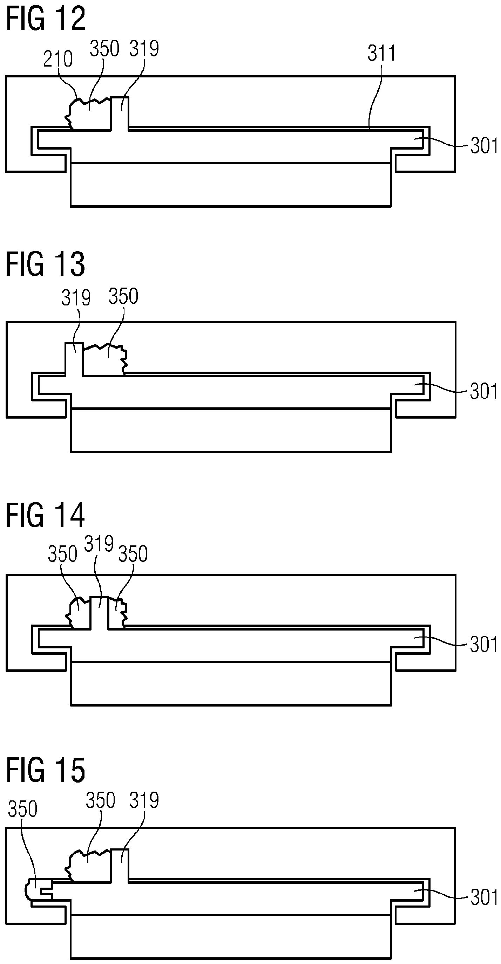

**Figures 11** to **15** show respective further embodiments of the invention, where the elastomeric insert 350 is provided inside the radial recess 210 in contact with the base side 311 of the baseplate 301. According to embodiments of the invention (figures 12 to 14) the radial recess 210 houses on or more elastomeric inserts 350 and one or more tips 319 protruding from the base side 311 of the baseplate 301. In the embodiments of figures 12 to 14, the tip 319 protrudes radially from the base side 311 of the baseplate 301, i.e. orthogonal to the base side 311. According to other embodiments (not shown), the tip 319 protruding from the base side 311 could be inclined of an angle smaller or bigger than 90 degrees with respect to the base side 311. According to other embodiments (not shown), the tip 319 protruding from the base side 311 has not a straight shape, for example it could be provided with an "L" or curved profile. The tip 319 may be in contact with one tangential side of the radial recess 210 (figures 12 and 13), the elastomeric insert 350 filling the space between the tip 319 and the other tangential side of the radial recess 210. The tip 319 may be not in contact with one tangential side of the radial recess 210 (figure 14), two elastomeric inserts 350 filling the space between the tip 319 and the tangential sides of the radial recess 210. According to embodiments of the present invention elastomeric inserts 350 may be provided at both the tangential recess 310 and radial recess 210. Figure 15 shows one possible exemplary embodiment with elastomeric inserts 350 provided at both the tangential recess 310 and radial recess 210, which is derived as a combination of the embodiments of figures 5 and 12.

## Claims

1. A permanent magnet electrical machine (10) including a rotor body (130) and a plurality of permanent magnet modules (101) arranged around a rotational axis (Y) of the permanent magnet electrical machine (10), each permanent magnet module (101) comprising at least a permanent magnet (200) and a baseplate (301), the baseplate (301) including a base side (311) for attaching the permanent magnet module (101) to the rotor body (130) of the permanent magnet machine (10) and an opposite top side (312) for attaching the permanent magnet (200) to the baseplate (301),
wherein the rotor body (130) includes at least a recess (210, 310) facing the baseplate (301) or at least partially housing the baseplate (301) and wherein at least one elastomeric insert (350) is provided inside the recess (210, 310) between the baseplate (301) and the rotor body (130).

2. The permanent magnet electrical machine (10) according to claim 1, wherein the recess (210) faces the base side (311) of the baseplate (301) and houses a non-magnetic and/or non-conductive medium for creating a magnetic flux barrier between the rotor body (130) and the permanent magnet module (101) .

3. The permanent magnet electrical machine (10) according to claim 2, wherein the non-magnetic and/or non-conductive medium is air.

4. The permanent magnet electrical machine (10) according to claim 2, wherein the non-magnetic and/or non-conductive medium is the elastomeric insert (350).

5. The permanent magnet electrical machine (10) according to claim 4, wherein the recess (210) houses the elastomeric insert (350) and a tip (319) protruding from the base side (311) of the baseplate (301).

6. The permanent magnet electrical machine (10) according to any of the previous clams, wherein the rotor body (130) includes a plurality of circumferential recess (310) each circumferential recess (310) housing a respective circumferential edge of the baseplate (301), at least one elastomeric insert (350) being provided at one circumferential edge (315, 316) of the baseplate (301) between the baseplate (301) and the rotor body (130).

7. The permanent magnet electrical machine (10) according to any of the previous clams, wherein the elastomeric insert (350) is fixed to the baseplate (301).

8. The permanent magnet electrical machine (10) according to claim 6, wherein at least one circumferentially protruding tip (317) is provided at one circumferential edge (315, 316) of the baseplate (301) for fixing the elastomeric insert (350) is to the baseplate (301).

9. The permanent magnet electrical machine (10) according to claim 6, wherein at least one groove (318) is provided at one circumferential edge (315, 316) of the baseplate (301) for fixing the elastomeric insert (350) to the baseplate (301) .

10. The permanent magnet electrical machine (10) according to any of the previous clams 1 to 6, wherein the elastomeric insert (350) is fixed to the rotor body (130).

11. The permanent magnet electrical machine (10) according to any of the previous clams 1 to 6, wherein the elastomeric insert (350) is provided as a detachable element between the rotor body (130) and the permanent magnet module (101).

12. The permanent magnet electrical machine (10) according to claim 9, wherein the at least one elastomeric insert (350) is extended along the rotational axis (Y).

13. A wind turbine (1) including an electrical generator (10) according to any of the previous claims.
